# EUROPÄISCHE PATENTANMELDUNG

(11) **EP 4 156 468 A1**
(43) Veröffentlichungstag der Anmeldung: **29.03.2023**
(21) Anmeldenummer: 21198319.2
(22) Anmeldetag: 22.09.2021
(51) Int. Cl.: H02K 3/12, H02K 3/28

(54) **STATOR FÜR EINE ELEKTRISCHE MASCHINE UND ELEKTRISCHE MASCHINE**

(71) Anmelder: Valeo eAutomotive Germany GmbH, 91056 Erlangen (DE)
(72) Erfinder: DOTZ, Boris, 97616 Bad Neustadt a.d.Saale (DE); FINGER-ALBERT, Christian, 97616 Bad Neustadt a.d.Saale (DE)
(74) Vertreter: Valeo Powertrain Systems

(57) **Zusammenfassung**

Stator (1) für elektrische Maschine (101), aufweisend einen Statorkern (2), in dem eine Vielzahl entlang einer Umfangsrichtung verteilter Nuten (3, 3a-d) ausgebildet ist und der zwei gegenüberliegende Stirnseiten (4, 5) aufweist, und eine Statorwicklung (6), die eine Vielzahl von Formleitern (7, 7a-h) aufweist,
- die Formleiter (7, 7a-h) jeweils einen ersten Beinabschnitt (8, 8a-h), einen zweiten Beinabschnitt (9, 9a-h) und einen die Beinabschnitte (8, 8a-h, 9, 9a-h) an einer der Stirnseiten (4) verbindenden Kopfabschnitt (10, 10a-h) aufweisen,
- sich die Beinabschnitte (8, 8a-h, 9, 9a-h) durch unterschiedliche Nuten (3, 3a-d) erstrecken und eine Schrittweite von einer Anzahl Nuten (3, 3a-d) voneinander entfernt sind,
- der Kopfabschnitt (10, 10a-h) einen inneren Abschnitt (12, 12a-h), einen äußeren Abschnitt (13, 13a-h), und einen Versatzabschnitt (14, 14a-h), der den inneren Abschnitt (12, 12a-h) mit dem äußeren Abschnitt (13, 13a-h) verbindet und eine größere Radialerstreckung als der innere Abschnitt (12, 12a-h) und der äußere Abschnitt (13, 13a-h) aufweist, aufweist,
- die Schrittweite bei einem ersten und einem zweiten der Formleiter (7a, 7b) S beträgt, bei einem dritten der Formleiter (7c) um wenigstens eins größer als S ist und bei einem vierten der Formleiter (7d) um wenigstens eins kleiner als S ist, und
- der äußere Abschnitt (13c) des dritten Formleiters (7c) zumindest teilweise radial weiter außen verläuft als die äußeren Abschnitte (13a, 13b, 13d) des ersten, zweiten und vierten Formleiters (7a, 7b, 7d).

## Beschreibung

Die vorliegende Erfindung betrifft einen Stator für elektrische Maschine, aufweisend einen Statorkern, in dem eine Vielzahl entlang einer Umfangsrichtung verteilter Nuten ausgebildet ist und der zwei in einer Axialrichtung gegenüberliegende Stirnseiten aufweist, und eine Statorwicklung, die eine Vielzahl von Formleitern aufweist, wobei die Formleiter jeweils einen ersten Beinabschnitt, einen zweiten Beinabschnitt und einen die Beinabschnitte an einer der Stirnseiten elektrisch leitfähig verbindenden Kopfabschnitt aufweisen, wobei sich die Beinabschnitte eines jeweiligen Formleiters durch unterschiedliche Nuten erstrecken und eine Schrittweite von einer Anzahl Nuten voneinander entfernt sind, wobei der Kopfabschnitt einen inneren Abschnitt, der sich in der Umfangsrichtung erstreckt und an den ersten Beinabschnitt anschließt, und einen äußeren Abschnitt, der sich in der Umfangsrichtung erstreckt, an den zweiten Beinabschnitt anschließt und radial weiter außen angeordnet ist als der innere Abschnitt, aufweist, wobei die Schrittweite bei einem ersten und einem zweiten der Formleiter S beträgt, bei einem dritten der Formleiter um wenigstens eins größer als S ist und bei einem vierten der Formleiter um wenigstens eins kleiner als S ist, wobei S eine natürliche Zahl ist.

Daneben betrifft die Erfindung eine elektrische Maschine.

Aus der DE 11 2019 004 037 T5 ist ein Stator für eine elektrische Maschine, umfassend einen Statorkörper, der eine Mehrzahl von Wicklungen trägt, bekannt. Der Statorkörper umfasst eine Mehrzahl von Schlitzen. Ein Leiter der Wicklung bildet Wickelköpfe aus, die Biegungen mit einer ersten Wicklungsschrittweite, einer zweiten Wicklungsschrittweite und einer dritten Wicklungsschrittweite aufweisen. Die zweite Wicklungsschrittweite ist um eins größer als die erste Wicklungsschrittweite. Die dritte Wicklungsschrittweite ist um eins kleiner als die erste Wicklungsschrittweite.

Bei Statoren mit einer Statorwicklung aus Formleitern, deren Kopfabschnitte unterschiedliche Schrittweiten aufweisen, müssen diese Kopfabschnitte auf geeignete Weise zueinander angeordnet werden. Dabei wird beispielsweise ein geringer axialer Wicklungsüberhang an der Stirnseite, an der sich die Kopfabschnitte befinden, gewünscht. Ebenso soll das Anordnen der Formleiter im Statorkern fertigungstechnisch einfach sein.

Der Erfindung liegt die Aufgabe zugrunde, eine verbesserte Möglichkeit zur Anordnung von Formleitern einer Statorwicklung mit unterschiedlichen Schrittweiten anzugeben.

Diese Aufgabe wird erfindungsgemäß bei einem Stator der eingangs genannten Art dadurch gelöst, dass der Kopfabschnitt ferner einen Versatzabschnitt, der den inneren Abschnitt mit dem äußeren Abschnitt verbindet und eine größere Radialerstreckung als der innere Abschnitt und der äußere Abschnitt aufweist, aufweist, und dass der äußere Abschnitt des Kopfabschnitts des dritten Formleiters zumindest teilweise radial weiter außen verläuft als die äußeren Abschnitte der Kopfabschnitte des ersten, zweiten und vierten Formleiters.

Der erfindungsgemäße Stator für elektrische Maschine weist einen Statorkern auf. Im Statorkern ist eine Vielzahl Nuten ausgebildet. Die Nuten sind entlang einer Umfangsrichtung verteilt. Der Statorkern weist zwei Stirnseiten auf. Die Stirnseiten sind in einer Axialrichtung gegenüberliegend. Der Stator weist ferner eine Statorwicklung auf. Die Statorwicklung weist eine Vielzahl von Formleitern aufweist. Die Formleiter weisen jeweils einen ersten Beinabschnitt, einen zweiten Beinabschnitt und einen Kopfabschnitt auf. Der Kopfabschnitt verbindet die Beinabschnitte an einer der Stirnseiten elektrisch leitfähig. Die Beinabschnitte eines jeweiligen Formleiters erstrecken sich durch unterschiedliche Nuten erstrecken. Die Beinabschnitte eines jeweiligen Formleiters sind eine Schrittweite von einer Anzahl Nuten voneinander entfernt. Der Kopfabschnitt weist einen inneren Abschnitt auf. Der innere Abschnitt erstreckt sich in der Umfangsrichtung erstreckt. Der innere Abschnitt schließt sich an den ersten Beinabschnitt an. Der Kopfabschnitt weist einen äußeren Abschnitt auf. Der äußere Abschnitt erstreckt sich in der Umfangsrichtung. Der äußere Abschnitt schließt sich an den zweiten Beinabschnitt an. Der äußere Abschnitt ist radial weiter außen angeordnet als der innere Abschnitt. Die Schrittweite bei einem ersten und einem zweiten der Formleiter beträgt S. S ist eine natürliche Zahl. Bei einem dritten der Formleiter ist die Schrittweite um wenigstens eins größer als S. Bei einem vierten der Formleiter ist die Schrittweite um wenigstens eins kleiner als S. Der Kopfabschnitt weist ferner einen Versatzabschnitt auf. Der Versatzabschnitt verbindet den inneren Abschnitt mit dem äußeren Abschnitt. Der Versatzabschnitt weist eine größere Radialerstreckung als der innere Abschnitt und der äußere Abschnitt auf. Der äußere Abschnitt des Kopfabschnitts des dritten Formleiters verläuft zumindest teilweise radial weiter außen als die äußeren Abschnitte der Kopfabschnitte des ersten, zweiten und vierten Formleiters.

Die Erfindung beruht auf der Überlegung, den äußeren Abschnitt des drittes Formleiter, also jenen mit der großen Schrittweite, radial außen an den äußeren Abschnitten des ersten, zweiten und vierten Formleiter das entlangzuführen, um so radialen Bauraum auszunutzen. Der erforderliche Versatz in Radialrichtung wird dabei durch den Versatzabschnitt eines jeweiligen Kopfabschnitts ausgebildet. Dadurch kann ein geringer Wicklungsüberhang auf der ersten Stirnseite erzielt werden.

Der Statorkern kann aus einer Vielzahl axial geschichteter und/oder gegeneinander elektrisch isolierter Einzelbleche gebildet sein.

Der innere Abschnitt und/oder der äußere Abschnitt des Kopfabschnitts eines jeweiligen Formleiters erstrecken sich vorzugsweise in Umfangsrichtung und in Axialrichtung. Der Versatzabschnitt des Kopfabschnitts eines jeweiligen Formleiters bildet vorzugsweise einen radialen Versatz zwischen dem Versatzabschnitt zugewandten Enden des inneren Abschnitts und des äußeren Abschnitts des jeweiligen Formleiters aus. Der Versatzabschnitt des Kopfabschnitts eines jeweiligen Formleiters bildet insbesondere eine axial am weitesten vom Statorkern entfernte Stelle des Kopfabschnitts aus. An dieser Stelle kehrt sich die axiale Erstreckung des Versatzabschnitts insbesondere um. Ein Übergang vom ersten Beinabschnitt zum inneren Abschnitt und/oder ein Übergang vom inneren Abschnitt zum Versatzabschnitt und/oder ein Übergang vom Versatzabschnitt zum äußeren Abschnitt und/oder ein Übergang vom äußeren Abschnitt zum zweiten Beinabschnitt ist bzw. sind bevorzugt mit einem Biegeradius ausgebildet, der geringer als jeder auf dem inneren Abschnitt und/oder äußeren Abschnitt auftretender Biegeradius ist.

Die Formleiter können ferner jeweils zwei sich auf der dem Kopfabschnitt abgewandten Seite an die Beinabschnitte anschließende Verbindungsabschnitte aufweisen, die auf der anderen Stirnseite des Statorkerns angeordnet sind. Ein jeweiliger Verbindungsabschnitt kann mit dem Verbindungsabschnitt eines anderen Formleiters elektrisch leitfähig und mechanisch verbunden sein. Vorzugsweise sind die Verbindungsabschnitte stoffschlüssig, insbesondere mittels Schweißens, verbunden. Die Beinabschnitte und/oder der Kopfabschnitt und/oder die Verbindungsabschnitte eines jeweiligen Formleiters können einstückig ausgebildet sein. Die Formleiter sind bevorzugt jeweils aus einem mehrfach gebogenen Stab gebildet. Die Formleiter können aus einem Metall, vorzugsweise aus Kupfer, gebildet sein.

Die Formleiter weisen insbesondere rechteckförmige Querschnitte auf mit zwei Seitenlängen. Die beiden Seitenlängen können gleich sein, weisen aber vorzugsweise unterschiedliche Längen auf. Werden beispielsweise die Formleiter über ihre längeren Seiten gebogen, sind vorzugsweise ihre Biegeradien mindestens so groß wie die kürzeren Seitenlängen lang sind. Werden beispielsweise die Formleiter über ihre kürzeren Seiten gebogen, sind vorzugsweise die Biegeradien mindestens dreiviertel so groß, wie die längeren Seitenlängen lang sind.

In bevorzugter Ausgestaltung ist vorgesehen, dass der äußere Abschnitt des Kopfabschnitts des vierten Formleiters zumindest teilweise radial weiter außen verläuft als der äußere Abschnitt des Kopfabschnitts des ersten Formleiters. Dadurch kann der äußere Abschnitt des Kopfabschnitts des vierten Formleiters, welcher die geringe Schrittweite aufweist, platzsparend am äußeren Abschnitt des ersten Formleiters mit der Schrittweite S vorbeigeführt werden.

Vorzugweise ist jede Nut radial zumindest in erste bis vierte Schichten, die in der Reihenfolge ihrer Benennung aufeinanderfolgen, zum Aufnehmen eines der Beinabschnitte eines der Formleiter untergliedert. Die erste Schicht kann die radial innere Schicht sein. In Weiterbildung kann vorgesehen sein, dass der erste Beinabschnitt in der ersten oder zweiten Schicht angeordnet ist. Alternativ oder zusätzlich vorgesehen sein, dass der zweite Beinabschnitt in der dritten oder vierten Schicht angeordnet ist.

Im Detail kann vorgesehen sein, dass
- der erste Beinabschnitt des ersten Formleiters in der ersten Schicht angeordnet ist und/oder
- der zweite Beinabschnitt des ersten Formleiters in der dritten Schicht angeordnet ist und/oder
- der erste Beinabschnitt des zweiten Formleiters in der ersten Schicht angeordnet ist und/oder
- der zweite Beinabschnitt des zweiten Formleiters in der dritten Schicht angeordnet ist und/oder
- der erste Beinabschnitt des dritten Formleiters in der zweiten Schicht angeordnet ist und/oder
- der zweite Beinabschnitt des dritten Formleiters in der vierten Schicht angeordnet ist und/oder
- der erste Beinabschnitt des vierten Formleiters in der zweiten Schicht angeordnet ist und/oder
- der zweite Beinabschnitt des vierten Formleiters in der vierten Schicht angeordnet ist.

Zweckmäßigerweise kann vorgesehen sein, dass die ersten Beinabschnitte des ersten und dritten Formleiters in derselben Nut angeordnet sind und die ersten Beinabschnitte des zweiten und vierten Formleiters in derselben Nut angeordnet sind. Dabei wird es bevorzugt, dass die Nut, in welcher die ersten Beinabschnitte des ersten und dritten Formleiters angeordnet sind, und die Nut, in welcher die ersten Beinabschnitte des zweiten und vierten Formleiters angeordnet sind, unmittelbar benachbart sind. Alternativ oder zusätzlich ist vorgesehen, dass die zweiten Beinabschnitte des ersten und vierten Formleiters in derselben Nut angeordnet sind und die zweiten Beinabschnitte des zweiten und dritten Formleiters in derselben Nut angeordnet sind. Dabei kann vorgesehen sein, dass die Nut, in welcher die zweiten Beinabschnitte des ersten und vierten Formleiters angeordnet sind, und die Nut, in die zweiten Beinabschnitte des zweiten und dritten Formleiters, angeordnet sind, unmittelbar benachbart sind.

Außerdem kann bei fünften bis achten der Formleiter die Schrittweite S betragen, wobei die ersten Beinabschnitte des fünften und sechsten Formleiters derselben Nut angeordnet sein können und die Nut benachbart zur Nut sein kann, in welcher die ersten Beinabschnitte des ersten und dritten Formleiters angeordnet sind. Die die ersten Beinabschnitte des siebten und achten Formleiters können in derselben Nut angeordnet sein und die Nut benachbart zur Nut sein, in welcher die ersten Beinabschnitte des zweiten und vierten Formleiters angeordnet sind. Vorzugsweise ist vorgesehen, dass die Kopfabschnitte des ersten bis vierten Formleiters zwischen den Kopfabschnitten des fünften und sechsten Formleiters und den Kopfabschnitten des siebten und achten Formleiters angeordnet sind.

Bei einer ersten bevorzugten Ausgestaltung des erfindungsgemäßen Stators können ein oder mehrere der folgenden Merkmale vorgesehen sein:
Die Umfangsrichtungserstreckung der Versatzabschnitte des fünften bis achten Formleiters ist, insbesondere in Abhängigkeit einer Materialstärke der Formleiter und/oder ihrer Biegeradien, bevorzugt derart gering gewählt, dass der äußere Abschnitt des Kopfabschnitts des siebten Formleiters den äußeren Abschnitt des Kopfabschnitts des dritten Formleiters axial überdeckt. Durch die Ausgestaltung der fünften bis achten Formleiter wird der Wickelkopf weit aufgefächert. Durch das Auffächern entsteht zwischen dem fünften und sechsten Formleiter einerseits und dem siebten und achten Formleiter andererseits eine Lücke, in welche die ersten bis vierten Formleiter eingesetzt werden können. Die Lücke erlaubt es auch, einen Fügeprozess eines Formleiterkorbs, der zur Fertigung des Stators mit den Beinabschnitten voran in die Nuten eingeführt wird, einfach zu halten.

Der innere Abschnitt des Kopfabschnitts des ersten Formleiters kann sich radial weiter nach innen erstrecken als der innere Abschnitt des Kopfabschnitts des zweiten Formleiter und/oder als der innere Abschnitt des sechsten Formleiters und/oder als der innere Abschnitt des achten Formleiters. Alternativ oder zusätzlich kann sich der innere Abschnitt des Kopfabschnitts des ersten Formleiters über eine radial innere Begrenzung der Nuten, insbesondere über radial innere Mantelfläche des Statorkerns, hinaus radial nach innen erstrecken.

Der äußere Abschnitt des Kopfabschnitts dritten Formleiters kann sich soweit nach außen erstrecken wie der äußere Abschnitt des Kopfabschnitts des fünften Formleiters und/oder wie der äußere Abschnitt des Kopfabschnitts des siebten Formleiters. Der äußere Abschnitt des Kopfabschnitts des dritten Formleiters und/oder der äußere Abschnitt des Kopfabschnitts des fünften Formleiters und/oder der äußere Abschnitt des Kopfabschnitts des siebten Formleiters kann bzw. können sich über eine radial äußere Begrenzung der Nuten hinaus radial nach außen erstrecken.

Es kann vorgesehen sein, dass die Kopfabschnitte des fünften und siebten Formleiters und/oder die Kopfabschnitte des sechsten und achten Formleiters und/oder die Kopfabschnitte des fünften und zweiten Formleiters und/oder die Kopfabschnitte des siebten und zweiten Formleiters identisch geformt sind. Dadurch kann die Formenvielfalt der Formleiter geringgehalten werden.

Es kann ferner vorgesehen sein, dass
- der erste Beinabschnitt des fünften Formleiters in der zweiten Schicht angeordnet ist und/oder
- der zweite Beinabschnitt des fünften Formleiters in der vierten Schicht angeordnet ist und/oder
- der erste Beinabschnitt des sechsten Formleiters in der ersten Schicht angeordnet ist und/oder
- der zweite Beinabschnitt des sechsten Formleiters in der dritten Schicht angeordnet ist und/oder
- der erste Beinabschnitt des siebten Formleiters in der zweiten Schicht angeordnet ist und/oder
- der zweite Beinabschnitt des siebten Formleiters in der vierten Schicht angeordnet ist und/oder
- der erste Beinabschnitt des achten Formleiters in der ersten Schicht angeordnet ist und/oder
- der zweite Beinabschnitt des achten Formleiters in der dritten Schicht angeordnet ist.

Alternativ oder zusätzlich kann bei der ersten bevorzugten Ausführungsform vorgesehen sein, dass der äußere Abschnitt des Kopfabschnitts des zweiten Formleiters den äußeren Abschnitt des Kopfabschnitts des vierten Formleiters mit Blick auf die Stirnseite zumindest teilweise überdeckt.

Die erste bevorzugte Ausführungsform kann sich auch dadurch auszeichnen, dass der äußere Abschnitt des Kopfabschnitts des dritten Formleiters zumindest teilweise axial weiter vom Statorkern entfernt verläuft als der äußere Abschnitt des Kopfabschnitts des vierten Formleiters und/oder als der äußere Abschnitt des Kopfabschnitts des ersten Formleiters. Alternativ oder zusätzlich kann der äußere Abschnitt des Kopfabschnitts des zweiten Formleiters zumindest teilweise axial weiter vom Statorkern entfernt verlaufen als der äußere Abschnitt des Kopfabschnitts des vierten Formleiters und/oder als der äußere Abschnitt des Kopfabschnitts des ersten Formleiters. Dadurch kann der für die Anordnung des ersten bis vierten Formleiters vorhandene Raum effizient ausgenutzt und ein geringer Wicklungsüberhang erzielt werden.

Alternativ oder zusätzlich kann vorgesehen sein, dass die Versatzabschnitte der Kopfabschnitte der ersten, dritten und vierten Formleiter entlang eines Winkelbereichs der Umfangsrichtung, der zumindest die Hälfte eines vom Versatzabschnitt des Kopfabschnitts des ersten Formleiters eingenommenen Winkelbereichs der Umfangsrichtung einnimmt, nebeneinander verlaufen.

Bei einer zweiten bevorzugten Ausgestaltung des erfindungsgemäßen Stators können ein oder mehrere der folgenden Merkmale vorgesehen sein:
Der äußere Abschnitt des Kopfabschnitts des dritten Formleiters kann zumindest abschnittsweise radial weiter außen verlaufen als der äußere Abschnitt des Kopfabschnitts des fünften Formleiters und/oder als der äußere Abschnitt des Kopfabschnitts des siebten Formleiters. Durch kann die radiale Erstreckung des Wicklungskopfs nach innen geringgehalten werden.

Der äußere Abschnitt des Kopfabschnitts des zweiten Formleiters kann zumindest teilweise radial weiter innen verlaufen als der äußere Abschnitt des Kopfabschnitts des vierten Formleiters.

Alternativ oder zusätzlich kann bei vorgesehen sein, dass der äußere Abschnitt des Kopfabschnitts des zweiten Formleiters den äußeren Abschnitt des Kopfabschnitts des ersten Formleiters mit Blick auf die Stirnseite zumindest teilweise überdeckt.

Bei der zweiten Ausgestaltungsform können die Kopfabschnitte des ersten, des zweiten und des sechsten Formleiters identisch geformt sein. Alternativ oder zusätzlich können die Kopfabschnitte des vierten und fünften Formleiters identisch geformt sein.

In Weiterbildung des erfindungsgemäßen Stators kann vorgesehen sein, dass die ersten Abschnitte der Kopfabschnitte des ersten und dritten Formleiters zwischen dem an sie anschließenden Beinabschnitt und dem Versatzabschnitt radial nebeneinander verlaufen. Alternativ oder zusätzlich können die ersten Abschnitte der Kopfabschnitt des zweiten und vierten Formleiters zwischen dem an sie anschließenden Beinabschnitt und dem Versatzabschnitt radial nebeneinander verlaufen.

In bevorzugter Ausgestaltung bilden die Formleiter mehrere Stränge der Statorwicklung aus. Dabei können der erste bis vierte Formleiter zu demselben Strang gehören. Vorzugweise weist der Stator wenigstens drei Stränge auf. Jedem Strang entspricht dabei eine Phase des Stators.

Es wird ferner bevorzugt, dass die Formleiter für jeden Strang einen ersten Strompfad und einen zweiten Strompfad, der parallel oder in Reihe zum ersten Strompfad geschaltet ist, ausbilden, wobei der erste bis vierte Formleiter eine Formleiteranordnung ausbilden, bei welcher der dritte Formleiter und der vierte Formleiter im ersten Strompfad verschaltet sind und der erste Formleiter und der zweite Formleiter im zweiten Strompfad verschaltet sind. In Weiterbildung kann eine weitere entsprechende Formleiteranordnung vorgesehen sein, bei welcher der dritte Formleiter und der vierte Formleiter im zweiten Strompfad verschaltet sind und der erste Formleiter und der zweite Formleiter im ersten Strompfad verschaltet sind.

Der fünfte und sechste Formleiter einerseits und der siebte und achte Formleiter andererseits gehören insbesondere zu jeweils anderen Strängen als der erste bis vierte Formleiter.

Die der Erfindung zugrundeliegende Aufgabe wird ferner gelöst durch eine elektrische Maschine, aufweisend einen erfindungsgemäßen Stator; und einen Rotor, der drehbar innerhalb des Stators gelagert ist; wobei die elektrische Maschine dazu eingerichtet ein Fahrzeug anzutreiben.

Die elektrische Maschine ist vorzugsweise eine, insbesondere permanenterregte, Synchronmaschine oder eine Asynchronmaschine. Das Fahrzeug ist vorzugsweise ein batterieelektrisches Fahrzeug (BEV) oder ein Hybridfahrzeug.

Die der Erfindung zugrundeliegende Aufgabe wird ferner gelöst durch ein Fahrzeug, umfassend eine erfindungsgemäße elektrische Maschine.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine perspektivische Ansicht eines ersten Ausführungsbeispiels des erfindungsgemäßen Stators;
- Fig. 2: eine Prinzipskizze der Formleiter gemäß dem ersten Ausführungsbeispiel;
- Fig. 3: eine stirnseitige Ansicht des Stators gemäß dem ersten Ausführungsbeispiel;
- Fig. 4: eine perspektivische Detailansicht des Stators im Bereich des ersten bis vierten Formleiters gemäß dem ersten Ausführungsbeispiel;
- Fig. 5: eine stirnseitige Ansicht der Kopfabschnitte des ersten bis vierten Formleiters gemäß dem ersten Ausführungsbeispiel;
- Fig. 6: eine seitliche Ansicht der Kopfabschnitte des ersten bis vierten Formleiters von innen gemäß dem ersten Ausführungsbeispiel;
- Fig. 7: eine seitliche Ansicht der Kopfabschnitte des ersten bis vierten Formleiters von außen gemäß dem ersten Ausführungsbeispiel;
- Fig. 8: ein Blockschaltbild der Statorwicklung des Stators gemäß dem ersten Ausführungsbeispiel;
- Fig. 9: ein Wicklungsschema der Statorwicklung des Stators gemäß dem ersten Ausführungsbeispiel;
- Fig. 10: ein Ausschnitt des in Fig. 9 gezeigten Wicklungsschemas für einen Stang gemäß dem ersten Ausführungsbeispiel;
- Fig. 11: Detailansichten der Anordnung von Formleitern gemäß dem in Fig. 9 gezeigten Wicklungsschema gemäß dem ersten Ausführungsbeispiel;
- Fig. 12: eine stirnseitige Ansicht eines zweiten Ausführungsbeispiels des erfindungsgemäßen Stators;
- Fig. 13: eine perspektivische Detailansicht des Stators im Bereich des ersten bis vierten Formleiters gemäß dem zweiten Ausführungsbeispiel;
- Fig. 14: eine perspektivische Detailansicht des Stators im Bereich des ersten bis vierten Formleiters gemäß dem ersten Ausführungsbeispiel;
- Fig. 15: eine stirnseitige Ansicht der Kopfabschnitte des ersten bis vierten Formleiters gemäß dem zweiten Ausführungsbeispiel;
- Fig. 16: eine seitliche Ansicht der Kopfabschnitte des ersten bis vierten Formleiters von innen gemäß dem zweiten Ausführungsbeispiel;
- Fig. 17: eine seitliche Ansicht der Kopfabschnitte des ersten bis vierten Formleiters von außen gemäß dem zweiten Ausführungsbeispiel; und
- Fig. 18: eine Prinzipskizze eines Ausführungsbeispiels des erfindungsgemäßen Fahrzeugs mit einem Ausführungsbeispiel der erfindungsgemäßen elektrischen Maschine.

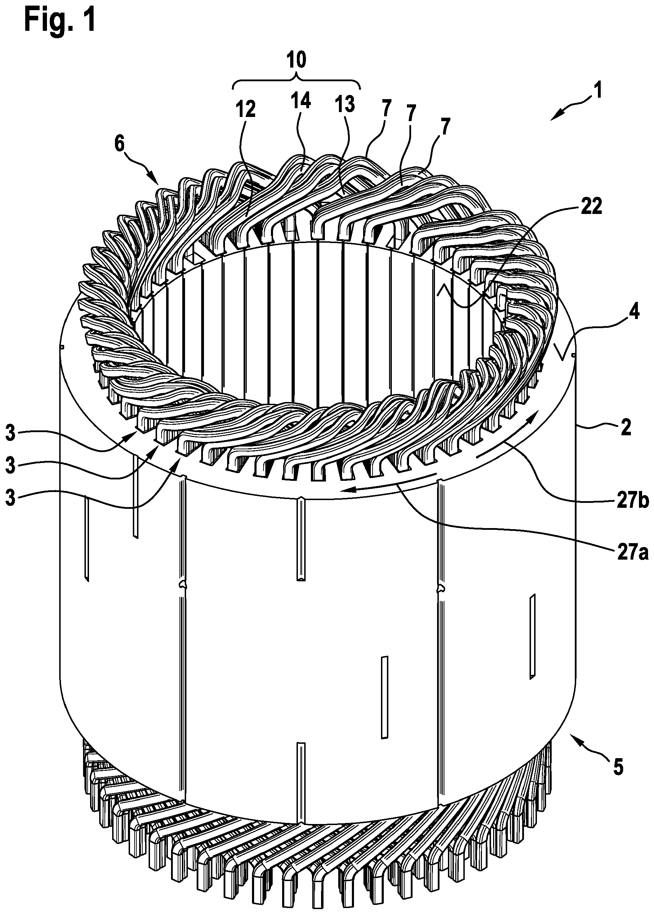

Fig. 1 ist eine perspektivische Ansicht eines ersten Ausführungsbeispiels eines Stators 1.

Der Stator 1 weist einen Statorkern 2, in dem eine Vielzahl entlang einer Umfangsrichtung verteilter Nuten 3 ausgebildet ist. Der Statorkern 2 weist eine erste Stirnseite 4 und eine dieser gegenüberliegende zweite Stirnseite 5 auf. Der Statorkern ist exemplarisch aus einer Vielzahl axial geschichteten und gegeneinander isolierten Einzelbleche ausgebildet und kann daher auch als Statorblechpaket bezeichnet werden. Daneben weist der Stator 1 eine Statorwicklung 6, die eine Vielzahl von Formleitern 7 aufweist, auf. Die Statorwicklung kann dementsprechend auch als Haarnadelwicklung (engl. hair pin winding) bezeichnet werden.

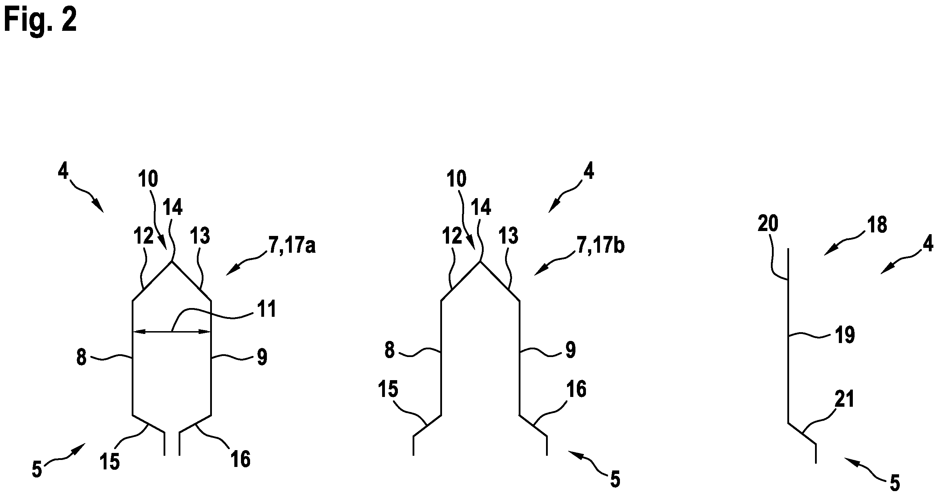

Fig. 2 ist eine Prinzipskizze der Formleiter 7 gemäß dem ersten Ausführungsbeispiel.

Die Formleiter 7 weisen jeweils einen ersten Beinabschnitt 8, einen zweiten Beinabschnitt 9 und einen die Beinabschnitte 8, 9 an der ersten Stirnseite 4 elektrisch leitfähig verbindenden Kopfabschnitt 10 auf. Die Beinabschnitte 8, 9 eines jeweiligen Formleiters 7 erstrecken sich durch unterschiedliche Nuten 3 (siehe Fig. 1) und sind eine Schrittweite von einer Anzahl Nuten voneinander entfernt. Die Schrittweite ist in Fig. 2 durch einen Doppelpfeil 11 illustriert.

Der Kopfabschnitt 10 weist einen inneren Abschnitt 12 auf, der sich an den ersten Beinabschnitt 8 anschließt. Außerdem weist der Kopfabschnitt 10 einen äußeren Abschnitt 13 auf, der sich an den zweiten Beinabschnitt 9 anschließt. Der Kopfabschnitt 10 weist ferner einen Versatzabschnitt 14 auf, der den inneren Abschnitt 12 mit dem äußeren Abschnitt 13 verbindet.

Daneben weist der Formleiter 7 an der dem Kopfabschnitt abgewandten Seite an die Beinabschnitte 8, 9 anschließende Verbindungsabschnitte 15, 16 auf. Die Verbindungsabschnitte 15, 16 sind an der zweiten Stirnseite 5 des Statorkerns 2 angeordnet. Ein jeweiliger Verbindungsabschnitt 15 ist mit dem Verbindungsabschnitt 16 eines anderen Formleiters 7 elektrisch leitfähig und mechanisch stoffschlüssig durch Schweißen verbunden. Die Beinabschnitte 8, 9, der Kopfabschnitt 10 und die Verbindungsabschnitte 15, 16 sind hier beispielhaft einstückig aus einem mehrfach gebogenen Kupferstab gebildet.

In Fig. 2 sind ferner eine erste Formleiterstruktur 17a und eine zweite Formleiterstruktur 17b gezeigt, die sich dadurch unterscheiden, dass bei der ersten Formleiterstruktur 17a die Verbindungsabschnitte 15, 16 zueinander weisen und bei der Formleiterstruktur 17b voneinander wegweisen.

Fig. 2 zeigt ferner einen Anschlussformleiter 18 der Statorwicklung 6. Der Anschlussformleiter 18 weist einen Beinabschnitt 19, der sich durch eine der Nuten 3 (siehe Fig. 1) erstreckt, einen sich daran an der ersten Stirnseite 3 anschließenden Anschlussabschnitt 20 und einen Verbindungsabschnitt 21, der sich an der zweiten Stirnseite 5 an den Beinabschnitt 19 anschließt, auf. Der Verbindungsabschnitt 21 ist mit einem Verbindungsabschnitt 15, 16 eines der Formleiter 7 verbunden. Der Anschlussabschnitt 20 dient zum Anschließen der äußern Enden der Statorwicklung 6 (siehe Fig. 1).

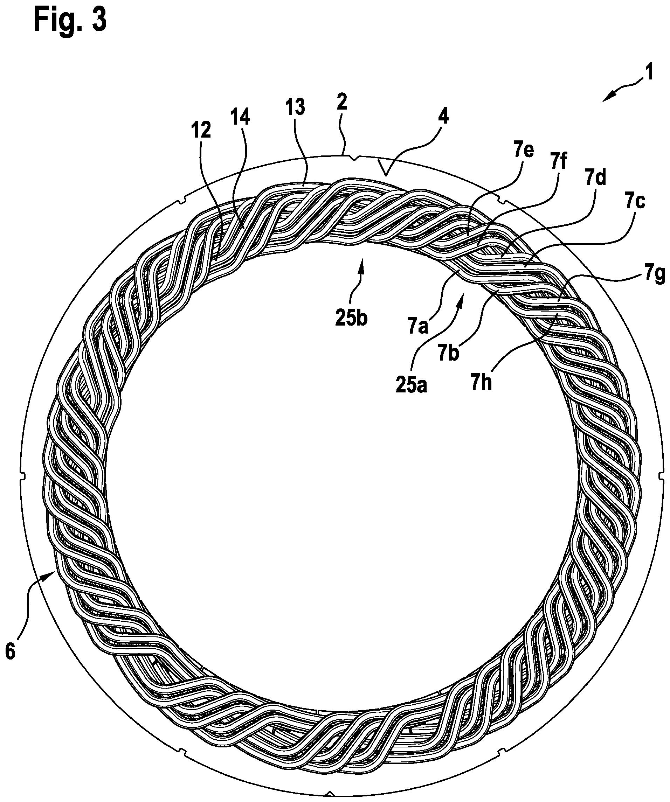

Fig. 3 ist eine stirnseitige Ansicht des Stators 1 gemäß dem ersten Ausführungsbeispiel.

Wie Fig. 3 zu entnehmen ist, erstrecken sich der innere Abschnitt 12 und der äußere Abschnitt 13 eines jeweiligen Formleiters 7 in Umfangsrichtung, wobei der äußere Abschnitt 13 radial weiter außen angeordnet ist als der innere Abschnitt 12. Der Versatzabschnitt 14 weist eine größere Radialerstreckung als der innere Abschnitt 12 und der äußere Abschnitt 13 auf. Wie in Zusammenschau mit Fig. 1 zu erkennen ist, erstrecken sich die inneren und äußeren Abschnitte 12, 13 vom Statorkern 2 wegweisend in axialer Richtung. Der Versatzabschnitt 14 des Kopfabschnitts 10 eines jeweiligen Formleiters 7 bildet eine axial am weitesten vom Statorkern 2 entfernte Stelle des Kopfabschnitts 10 aus.

Fig. 3 zeigt ferner, dass die Formleiter 7 einen ersten Formleiter 7a, einen zweiten Formleiter 7b, einen dritten Formleiter 7c und einen vierten Formleiter 7d umfassen. Daneben sind in Fig. 3 ein fünfter Formleiter 7e, ein sechster Formleiter 7f, ein siebter Formleiter 7g und ein achter Formleiter 7h gekennzeichnet. Im Folgenden werden die Beinabschnitte 8, 9, der Kopfabschnitt 10, der innere Abschnitt 12, der äußere Abschnitt 13, der Versatzabschnitt 14 und die Verbindungsabschnitte 15, 16 eines jeweiligen genauer benannten Formleiters 7a bis 7h mit demselben Kleinbuchstaben wie der Formleiter 7a bis 7h bezeichnet.

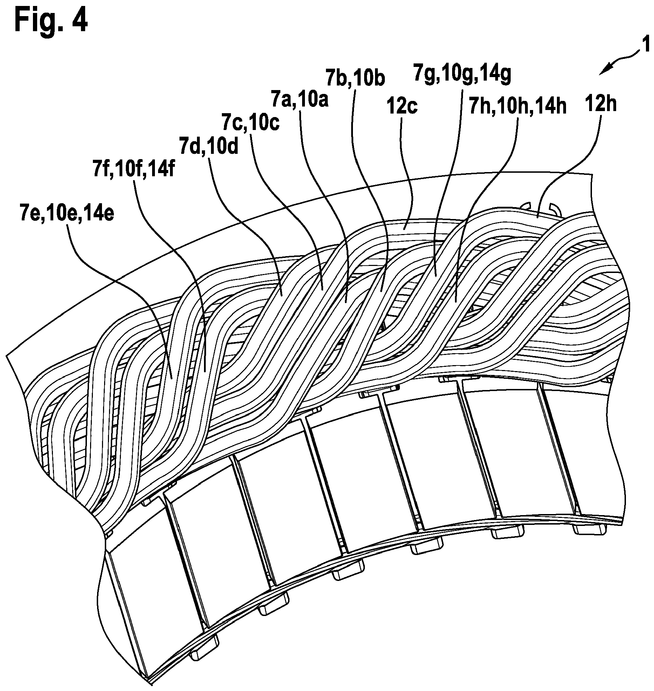

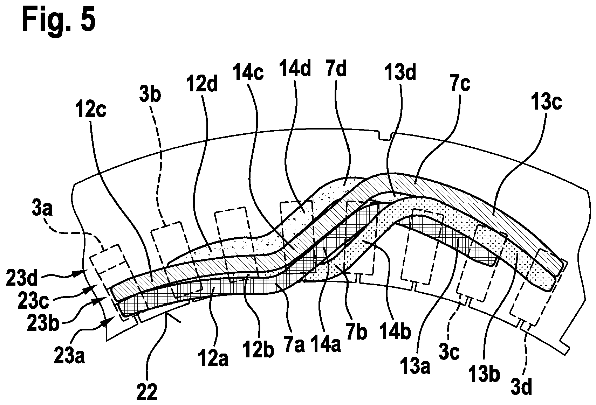

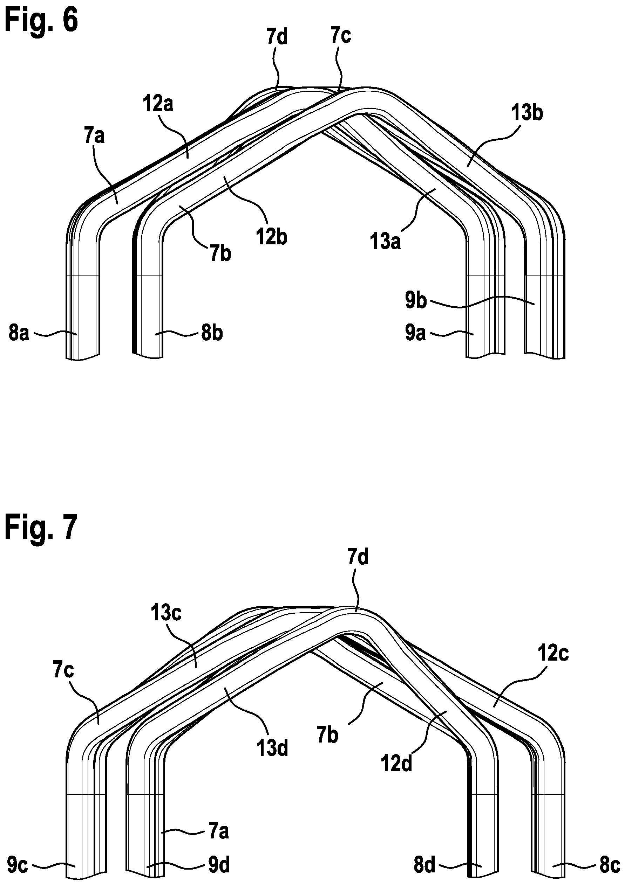

Fig. 4 bis 7 zeigen den ersten bis vierten Formleiter 7a bis 7d, wobei Fig. 4 eine perspektivische Detailansicht des Stators im Bereich des ersten bis vierten Formleiters 7a bis 7d ist, Fig. 5 eine stirnseitige Draufsicht ist, Fig. 6 seine seitliche Ansicht von innen und Fig. 7 eine seitliche Ansicht von außen ist.

Der erste Formleiter 7a und der zweite Formleiter 7b weisen jeweils eine Schrittweite S auf. Der dritte Formleiter 7c weist eine Schrittweite S+1 auf. Der vierte Formleiter 7d weist eine Schrittweite S-1 auf. Im vorliegenden Ausführungsbeispiel ist exemplarisch S = 6 gewählt, sodass die Schrittweiten des ersten und zweiten Formleiters 7a, 7b sechs, die Schrittweite des dritten Formleiters 7c sieben und die Schrittweite des vierten Formleiters 7d fünf betragen. In Fig. 5 sind dazu die Positionen von acht Nuten 3, 3a, 3b, 3c dargestellt, über welche sich die ersten bis vierten Formleiter 7a bis 7d erstrecken.

Der Stator 1 zeichnet sich insbesondere dadurch aus, dass der äußere Abschnitt 13c radial weiter außen verläuft als die äußeren Abschnitte 13a, 13b, 13d, wie es am besten in Fig. 5 zu sehen ist. Ebenso verläuft der äußere Abschnitt 13d (in Fig. 5 teilweise verdeckt durch den zweiten Formleiter 7b) radial weiter außen als der äußere Abschnitt 13a. Von der ersten Stirnseite aus betrachtet ist der äußere Abschnitt 13c der radial äußerste der äußeren Abschnitte 13a bis 13d und der äußere Abschnitt 13a der innerste der äußeren Abschnitte 13a bis 13d.

In Fig. 5 ist ferner zu erkennen, dass sich die äußeren Abschnitte 13b bis 13d jeweils über eine äußere radiale Begrenzung der Nuten 3 hinaus radial nach außen erstrecken. Außerdem erstreckt sich der innere Abschnitt 12a über eine innere Mantelfläche 22 des Statorkerns 2 (siehe Fig. 1) hinaus radial nach innen. Der äußere Abschnitt 13b überdeckt den äußeren Abschnitt 13d mit Blick auf die erste Stirnseite 4. Im Übrigen überdeckt der innere Abschnitt 12c den inneren Abschnitt 12b mit Blick auf die erste Stirnseite 4. Die Versatzabschnitte 14a, 14c, 14d der Kopfabschnitte 10a, 10c, 10d der ersten, dritten und vierten Formleiter 7a, 7c, 7d verlaufen entlang eines Winkelbereichs der Umfangsrichtung, der zumindest die Hälfte eines vom Versatzabschnitt 14a eingenommenen Winkelbereichs der Umfangsrichtung einnimmt, nebeneinander.

Wie insbesondere Fig. 6 und Fig. 7 zu entnehmen ist, verläuft der äußere Abschnitt 13b zumindest teilweise axial weiter vom Statorkern 2 entfernt als der äußere Abschnitt 13d und als der äußere Abschnitt 13a. Ebenso verläuft der äußere Abschnitt 13b axial weiter vom Statorkern 2 entfernt als der äußere Abschnitt 13d und als der äußere Abschnitt 13a.

Im Detail zeigen Fig. 6 und 7, dass die ersten Beinabschnitte 8a, 8c des ersten und dritten Formleiters 7a, 7c in derselben Nut 3a angeordnet sind und die ersten Beinabschnitte 8b, 8d des zweiten und vierten Formleiters 7b, 7d in derselben Nut 3b angeordnet sind. Die Nut 3b ist in Umfangsrichtung unmittelbar benachbart zur Nut 3a. Des Weiteren sind die zweiten Beinabschnitte 9a, 9d des ersten und vierten Formleiter 7a, 7d in derselben Nut 3c angeordnet und die zweiten Beinabschnitte 9b, 9c in der derselben Nut 3d angeordnet. Die Nut 3d ist in Umfangsrichtung unmittelbar benachbart zur Nut 3c.

Darüber hinaus ist jede Nut 3 radial in erste bis vierte Schichten 23a bis 23d, die in der Reihenfolge ihrer Benennung von innen nach außen aufeinanderfolgen, zum Aufnehmen eines der Beinabschnitte 8, 9 eines der Formleiter 7 untergliedert. Im vorliegenden Ausführungsbeispiel sind beim ersten Formleiter 7a der erste Beinabschnitt 8a in der ersten Schicht 23a der zweite Beinabschnitt 9a in der dritten Schicht 23c angeordnet ist. Beim zweiten Formleiter 7b sind erste Beinabschnitt 8b in der ersten Schicht 23a und der zweite Beinabschnitt 9b in der dritten Schicht angeordnet 23c. Beim dritten Formleiter 7c sind der erste Beinabschnitt 8c in der zweiten Schicht 23b angeordnet der zweite Beinabschnitt 9c in der vierten Schicht 23d angeordnet. Beim vierten Formleiter 7d sind der erste Beinabschnitt 8d in der zweiten Schicht 23b und der zweite Beinabschnitt 9d in der vierten Schicht 23d angeordnet.

Fig. 4 zeigt ferner den fünften bis achten Formleiter 7e bis 7h, welche jeweils die Schrittweite S aufweisen. Die ersten Beinabschnitte 8e, 8f des fünften und sechsten Formleiters 7e, 7f sind in derselben Nut 3 angeordnet, welche benachbart zur Nut 3a ist, in welcher die ersten Beinabschnitte 8a, 8c angeordnet sind. Die ersten Beinabschnitte 8g, 8h des siebten und achten Formleiters 7g, 7h sind in derselben Nut 3 angeordnet, welche benachbart zur Nut 3b ist, in welcher die ersten Beinabschnitte 8b, 8d angeordnet sind. Des Weiteren sind die ersten Beinabschnitte 8e, 8h des fünften und siebten Formleiters 7e, 8h in der zweiten Schicht 23b und die ersten Beinabschnitte 8f, 8g des sechsten und achten Formleiters 7f, 7g in der der ersten Schicht 23a angeordnet. Die zweiten Beinabschnitte 9e, 9h des fünften und siebten Formleiters 7e, 8h sind in der vierten Schicht 23d und die zweiten Beinabschnitte 9f, 9g des sechsten und achten Formleiters 7f, 7g in der der dritten Schicht 23c angeordnet.

Die Kopfabschnitte 10a bis 10d des ersten bis vierten Formleiters 7a bis 7d sind zwischen den Kopfabschnitten 10e, 10f des fünften und sechsten Formleiters 7e, 7f und den Kopfabschnitten 10g, 10h des siebten und achten Formleiters 7g, 7h angeordnet.

Wie in Fig. 4 zu sehen ist, ist die Umfangsrichtungserstreckung der Versatzabschnitte 14e bis 14h des fünften bis achten Formleiters 7e bis 7h in Abhängigkeit einer Materialstärke der Formleiter 7 und ihrer Biegeradien, derart gering gewählt ist, dass der äußere Abschnitt 12h des Kopfabschnitts 10h des siebten Formleiters 7h den äußeren Abschnitt 12c des Kopfabschnitts 10c des dritten Formleiters 7c axial überdeckt. Durch diese Ausgestaltung des fünften bis achten Formleiters 7e bis 7h werden diese aufgefächert, um zwischen dem fünften und sechsten Formleiter 7e, 7f einerseits und dem siebten und achten Formleiter 7g, 7h andererseits eine Lücke auszubilden, in welche der erste bis vierte Formleiter 7a bis 7d eingesetzt werden kann. Die Lücke erlaubt es auch, einen Fügeprozess eines Formleiterkorbs, der zur Fertigung des Stators 1 mit den Beinabschnitten 8, 9 voran in die Nuten 3 eingeführt wird, einfach zu halten.

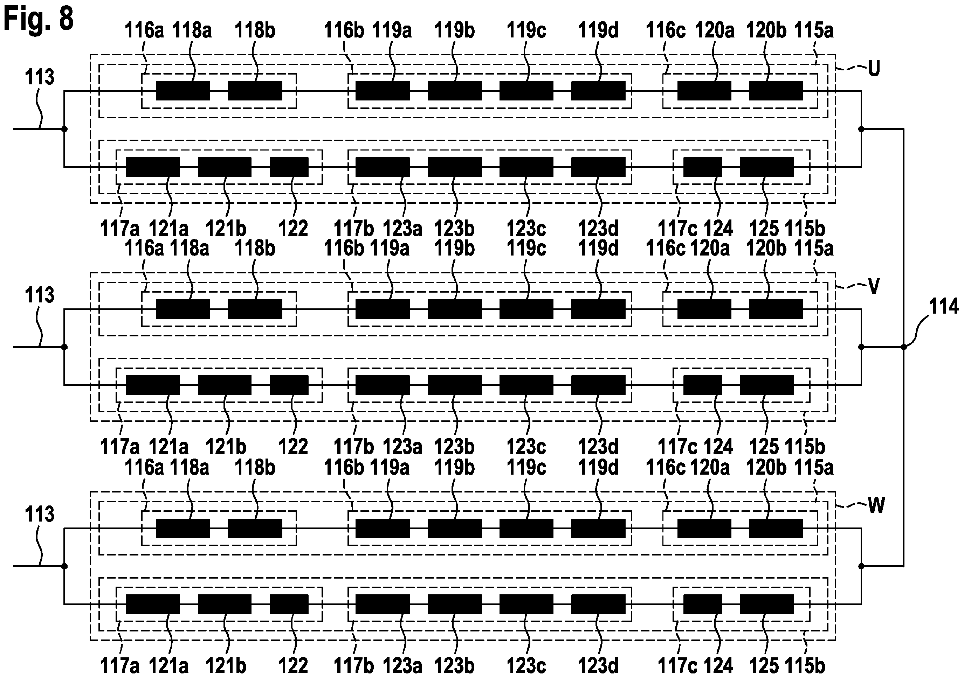

Fig. 8 ist ein Blockschaltbild der Statorwicklung des Stators 1 gemäß dem ersten Ausführungsbeispiel.

Der Stator 1 weist in der gezeigten exemplarischen Konfiguration N = 3 Phasen U, V, W und P = 4 Polpaare sowie eine Lochzahl q = 2 auf. Für jede Phase U, V, W bilden die Formleiter 7 einen ersten Strompfad 115a und einen zweiten Strompfad 115b aus. Die Strompfade 115a, 115b einer jeweiligen Phase U, V, W sind parallelgeschaltet. Alternativ ist auch eine Reihenschaltung der Strompfade 115a, 115b möglich. Die Formleiter 7 eines jeweiligen Strompfads 115a, 115b sind in Reihe geschaltet. Für jede der Phasen U, V, W sind die Strompfade 115a, 115b wie folgt aufgebaut:
Die Formleiter 7 des ersten Strompfads 115a bilden in der Reihenfolge von einem Phasenanschluss 113 zu einem Sternpunkt 114 einen ersten Abschnitt 116a, einen zweiten Abschnitt 116b und einen dritten Abschnitt 116c aus. Ebenso bilden die Formleiter 7 des zweiten Strompfads 115b in der Reihenfolge vom Phasenanschluss 113 zum Sternpunkt 114 einen ersten Abschnitt 117a, einen zweiten Abschnitt 117b und einen dritten Abschnitt 117c aus.

Die Formleiter 7 des ersten Abschnitts 116a des ersten Strompfads 115a bilden erste bis [(P/2)-te] Gruppen erster Art 118a, 118b von in Reihe geschalteten Beinabschnitten 8, 9, hier eine erste Gruppe erster Art 118a und eine zweite Gruppe erster Art 118b, aus. Die Formleiter 7 des zweiten Abschnitts 116b des ersten Strompfads 115a bilden erste bis P-te Gruppen zweiter Art 119a-d von in Reihe geschalteten Beinabschnitten 8, 9, hier eine erste Gruppe zweiter Art 119a, eine zweite Gruppe zweiter Art 119b, eine dritte Gruppe zweiter Art 119c und eine vierte Gruppe zweier Art 119d, aus. Die Formleiter 7 des dritten Abschnitts 116c des ersten Strompfads 115a bilden erste bis [(P/2)-te] Gruppen erster Art 120a, 120b von in Reihe geschalteten Beinabschnitten 8, 9, hier eine erste Gruppe erster Art 120a und eine zweite Gruppe erster Art 120b, aus.

Die Formleiter 7 des ersten Abschnitts 117a des zweiten Strompfads 115b bilden erste bis [(P/2)-te] Gruppen zweiter Art 121a, 121b von in Reihe geschalteten Beinabschnitten 8, 9, hier eine erste Gruppe zweiter Art 121a und eine zweite Gruppe zweiter Art 121b, sowie eine Halbgruppe erster Art 122, die auf ihrer dem zweiten Abschnitt 117b abgewandten Seite mit den Gruppen zweiter Art 121a, 121b in Reihe geschaltet ist, aus. Die Formleiter 7 des zweiten Abschnitts 117b des zweiten Strompfads 115b bilden erste bis P-te Gruppen dritter Art 123a-d von in Reihe geschalteten Beinabschnitten 8, 9, hier eine erste Gruppe dritter Art 123a, eine zweite Gruppe dritter Art 123b, eine dritte Gruppe dritter Art 123c und eine vierte Gruppe dritter Art 123d, aus. Die Formleiter 7 des dritten Abschnitts 117c des zweiten Strompfads 115a bilden eine Halbgruppe zweiter Art 124 sowie erste bis [(P/2-1)-te] Gruppen zweiter Art 125 von in Reihe geschalteten Beinabschnitten 8, 9, hier eine (erste) Gruppe zweiter Art 125, die auf ihrer dem zweiten Abschnitt 117b zugewandten Seite mit der Halbgruppe zweiter Art 124 in Reihe geschaltet ist, aus.

Dabei sind die Abschnitte 116a-c, 117a-c und die Gruppen erster, zweiter und dritter Art 118a, 118b, 119a-d, 120a, 120b, 121a, 121b, 123a-d, 125 in ihrer jeweiligen Reihenfolge bezüglich der Reihenschaltung, hier vom Phasenanschluss 113 zum Sternpunkt 114 gezählt, benannt.

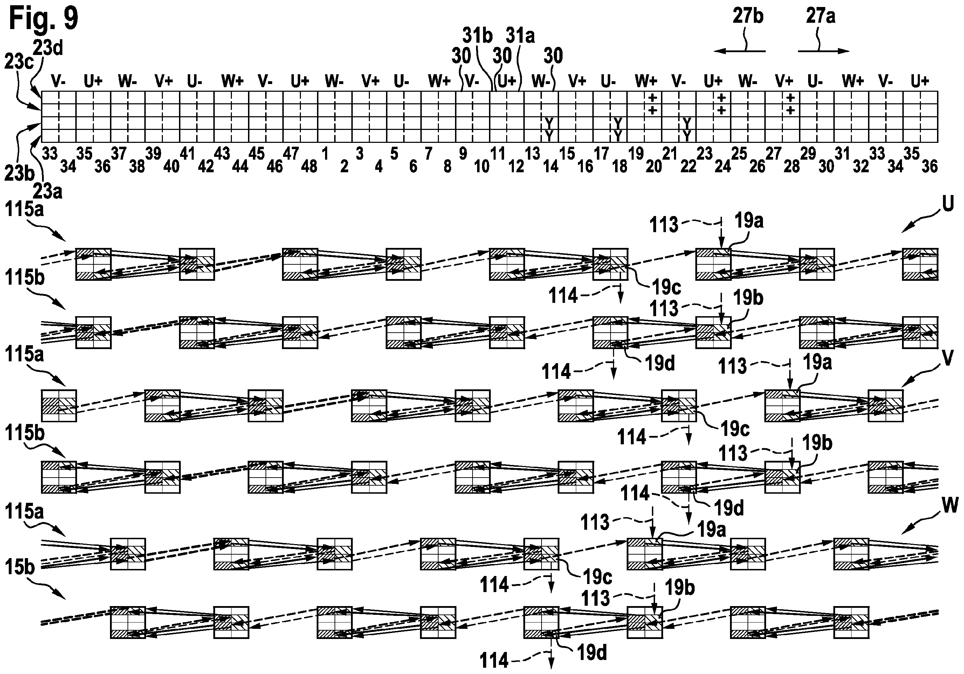

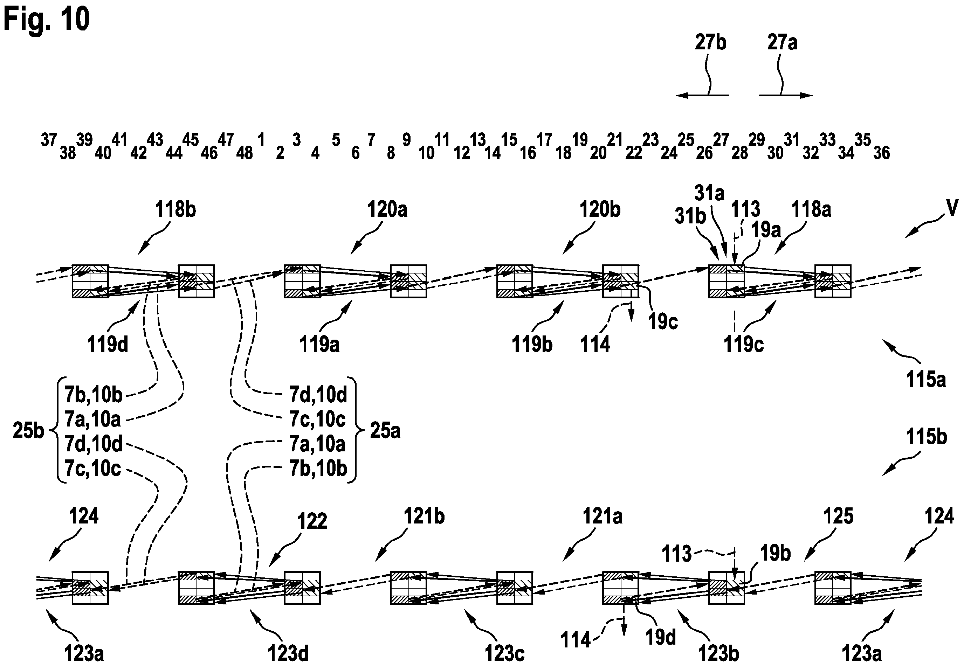

Fig. 9 ist ein Wicklungsschema der Statorwicklung des Stators gemäß dem ersten Ausführungsbeispiel. Fig. 10 ist ein Ausschnitt des in Fig. 9 gezeigten Wicklungsschemas für einen Stang V gemäß dem ersten Ausführungsbeispiel.

Der Stator 1 weist eine Gesamtzahl von 2·P·N·q = 48 Nuten 3 auf. Die Lochzahl q beschreibt also das Verhältnis der Anzahl der Nuten 3 zum Produkt aus der Anzahl der Pole 2·P und der Anzahl der Phasen N.

Jede Schicht 23a bis 23d einer jeweiligen Nut 3 bildet einen Aufnahmeplatz für genau einen Beinabschnitt 8, 9, 19 aus. Daraus ergibt sich eine Anzahl von insgesamt 2·P·N·q·L = 192 Aufnahmeplätzen bzw. Beinabschnitten 8, 9, 19 des Stators 1, wobei L die Anzahl der Schichten 23a bis 23d beschreibt.

Fig. 9 zeigt durch zwei oberhalb der oberen Tabelle angeordnete Pfeile eine erste Umfangsrichtung 27a, die von der ersten Stirnseite 7 des Stators 1 aus gesehen dem Uhrzeigersinn entspricht, und die zweite Umfangsrichtung 27b, die von der ersten Stirnseite 7 des Stators 1 aus betrachtet dem Gegenuhrzeigersinn entspricht (siehe auch Fig. 1). Ferner zeigt Fig. 9 unterhalb der oberen Tabelle eine Nutnummerierung von 1 bis 48. Die obere Tabelle in Fig. 9 zeigt, zu welchem Strang U, V, W ein in einem jeweiligen Aufnahmeplatz angeordneter Beinabschnitt 8, 9, 19 gehört, wobei durch den Zusatz "+" bzw. "-" eine Stromrichtung eines elektrischen Stroms durch den entsprechenden Beinabschnitte 8, 9, 19 bezeichnet ist.

In der oberen Tabelle sind ferner Aufnahmeplätze für einen Beinabschnitt 19a eines ersten Anschlussformleiters 18 eines jeweiligen ersten Strompfads 115a sowie für einen Beinabschnitt 19b eines ersten Anschlussformleiters 18 eines jeweiligen zweiten Strompfads 115b mit einem "+" gekennzeichnet. Die Beinabschnitte 19a, 19b sind an den Phasenanschluss 113 angeschlossen. Außerdem sind Aufnahmeplätze für einen Beinabschnitt 19c eines zweiten Anschlussformleiters 18 eines jeweiligen ersten Strompfads 115a sowie für einen bezüglich der Reihenschaltung Beinabschnitt 19d eines zweiten Anschlussformleiters 18 eines jeweiligen zweiten Strompfads 115b mit einem "Y" gekennzeichnet. Die Beinabschnitte 19c, 19d sind an den Sternpunkt 114 angeschlossen. Die Beinabschnitte 19a bis 19d sind die bezüglich der Reihenschaltung äußeren Beinabschnitte der Strompfade 115a, 115b.

Ersichtlich sind die Formleiter je Phase U, V, W in 2·P = 8 Wicklungszonen 30 angeordnet, die jeweils genau q·L = 8 Aufnahmeplätze umfassen. Jede Wicklungszone 30 ist in q = 2 Teilwicklungszonen 31a, 31b untergliedert. In jeder Wicklungszone 30 folgt die erste Teilwicklungszone 31a entlang der ersten Umfangsrichtung 27a der zweiten Teilwicklungszone 31b. Jede Teilwicklungszone 31a, 31b erstreckt sich über alle vier Schichten 23a bis 23d. Im vorliegenden Ausführungsbeispiel liegt jede Teilwicklungszonen 31a, 31b exemplarisch in genau einer Nut 3.

Zwischen den Aufnahmeplätzen bzw. den Beinabschnitten 8, 9, 19 sind die Kopfabschnitte 10 mit gestrichelten Pfeilen und die Verbindungsabschnitte 15, 16 mit durchgezogenen Pfeilen gekennzeichnet.

Die Formleiter eines jeweiligen Strompfads 115a, 115b bilden eine kombinierte Schleifen- und Wellenwicklung aus.

Die Darstellung der Formleiter 7 und der Kopfabschnitte für die Phase V ist repräsentativ für die übrigen Phasen U, W, bei denen die Anordnung der Formleiter 7 bis auf eine Verschiebung um q = 2 Nuten 3 jener der Phase V entspricht. Im Folgenden wird der Aufbau der Statorwicklung anhand der Phase V erläutert.

Fig. 10 ist eine Detailansicht des Wicklungsschemas für die Phase V.

Im ersten Strompfad 15a sind die Beinabschnitte 8, 9, 19a des ersten Abschnitts 116a, also jene der Gruppen erster Art 118a, 118b, sowie die Beinabschnitte 8, 9 des dritten Abschnitts 116c, also jene der Gruppen erster Art 120a, 120b, jeweils in der ersten Teilwicklungszone 31a angeordnet. Die Beinabschnitte 8, 9 des zweiten Abschnitts 116b, also jene der Gruppen zweiter Art 119a-d sind in der zweiten Teilwicklungszone 31b angeordnet. Im zweiten Pfad 115b sind die Beinabschnitte 8, 9, 19b des ersten Abschnitts 117a, also jene der Gruppen zweiter Art 121a, 121b und der Halbgruppe erster Art 122, sowie die Beinabschnitte 8, 9, 19d des dritten Abschnitts 117c, also der Halbgruppe zweiter Art 124 und der Gruppe zweiter Art 125, in der ersten Teilwicklungszone 31a angeordnet. Die Beinabschnitte 8, 9 des zweiten Abschnitts 117b, also jene der Gruppen dritter Art 123a-d, sind jeweils in der zweiten Teilwicklungszone 31b angeordnet. Die Beinabschnitte 19a, 19b der ersten Anschlussformleiter 18 des ersten und zweiten Pfads 15a, 15b sind in derselben Teilwicklungszone 31a und die Beinabschnitte 19c, 19d der zweiten Anschlussformleiter 18 des ersten und zweiten Strompfads 115a, 115b in derselben Teilwicklungszone 31b angeordnet. Hier sind die Beinabschnitte 19a, 19b in der ersten Teilwicklungszone 31a angeordnet, während die Beinabschnitte 19c, 19d in der zweiten Teilwicklungszone 31a angeordnet sind.

Die Strompfade 115a, 115b erstrecken sich entlang unterschiedlicher Umfangsrichtungen 27a, 27b. Hier erstreckt sich der erste Strompfad 115a entlang der ersten Umfangsrichtung 27a und der zweite Strompfad 115b entlang der zweiten Umfangsrichtung 27b. Innerhalb eines jeweiligen Strompfads 115a, 115b erstrecken sich der erste bis dritte Abschnitt 116a-c, 117a-c entlang derselben Umfangsrichtung 27a, 27b.

Im Strang V bilden der erste bis vierte Formleiter 7a bis 7b eine erste Formleiteranordnung 25a aus, bei welcher der dritte Formleiter 7a und der vierte Formleiter 7b im ersten Strompfad 115a verschaltet sind und der erste Formleiter 7a und der zweite Formleiter 7b im zweiten Strompfad 115 verschaltet sind. Im Strang V ist eine zweite entsprechende Formleiteranordnung 25b vorgesehen, bei welcher der erste Formleiter 7a und der zweite Formleiter 7b im ersten Strompfad 115a verschaltet sind und der dritte Formleiter 7c und der vierte Formleiter 7d im zweiten Strompfad 115b verschaltet sind. Entsprechend sind eine erste Formleiteranordnung 25a und eine zweite Formleiteranordnung 25b auch in den anderen Strängen U, W vorgesehen.

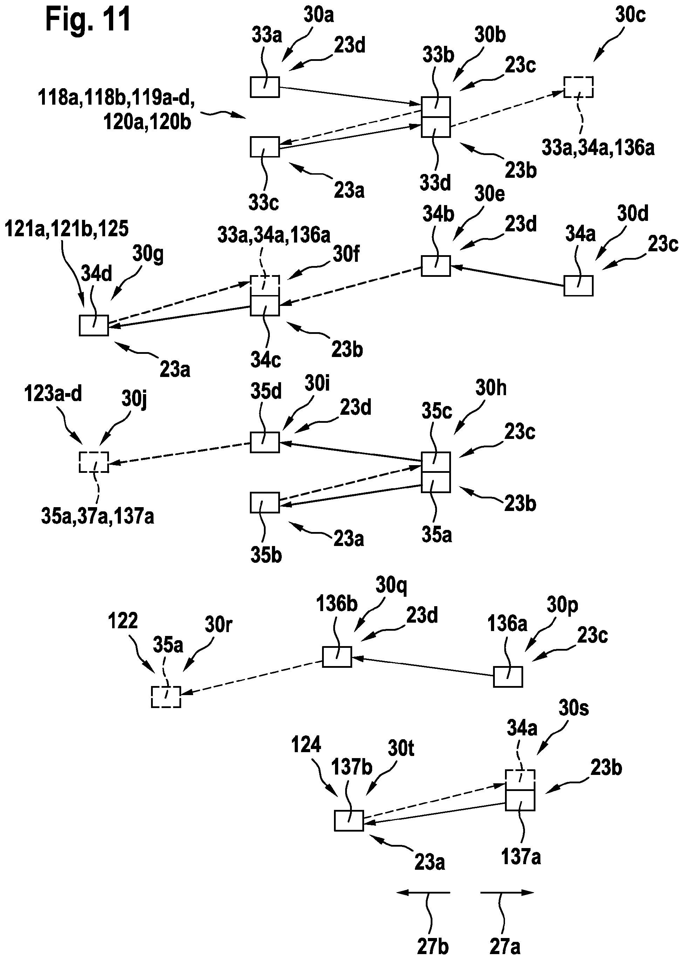

Fig. 11 ist eine Detaildarstellung die Gruppen 118a, 118b, 119a-d, 120a, 120b, 121a, 121b, 123a-d und 125 und Halbgruppen 122, 124 von Beinabschnitten 8, 9, 19 gemäß dem ersten Ausführungsbeispiel.

Die Gruppen erster Art 118a, 118b, 119a-d, 120a, 120b umfassen vier bezüglich der Reihenschaltung aufeinanderfolgende Beinabschnitte 8, 9, 19, die gesondert mit 33a-d bezeichnet und nummeriert sind. Ferner sind drei benachbarte der Wicklungszonen 30 gesondert mit 30a-c bezeichnet. Bei den Gruppen erster Art 118a, 118b, 119a-d, 120a, 120b ist ein erster Beinabschnitt 33a in der vierten Schicht 23d einer der Wicklungszonen 30a angeordnet. Ein zweiter Beinabschnitt 33b ist in der dritten Schicht 23c einer zur Wicklungszone 30a, in welcher der erste Beinabschnitt 33a angeordnet ist, entlang der ersten Umfangsrichtung 27a benachbarten Wicklungszone 30b angeordnet. Ein dritter Beinabschnitt 33c ist in der ersten Schicht 23d der Wicklungszone 30a, in welcher der erste Beinabschnitt 33a angeordnet ist, angeordnet. Ein vierter Beinabschnitt 33d ist in der zweiten Schicht 23b der Wicklungszone 30b, in welcher der zweite Formleiter 33b angeordnet ist, angeordnet.

Die Gruppen zweiter Art 121a, 121b, 125 umfassen vier bezüglich der Reihenschaltung aufeinanderfolgende Beinabschnitte 8, 9, 19, die gesondert mit 34a bis 34d bezeichnet und nummeriert sind. Ferner sind in Fig. 11 vier benachbarte der Wicklungszonen 30 gesondert mit 30d-g bezeichnet. Bei den Gruppen zweiter Art 121a, 121b, 125 ist ein erster Beinabschnitt 34a in der dritten Schicht 23c einer der Wicklungszonen 30d angeordnet. Ein zweiter Beinabschnitt 34b ist in der vierten Schicht 23d einer zur Wicklungszone 30d, in welcher der erste Beinabschnitt 34a angeordnet ist, entlang der zweiten Umfangsrichtung 27b benachbarten Wicklungszone 30e angeordnet. Ein dritter Beinabschnitt 34c ist in der zweiten Schicht 23b einer zur Wicklungszone 30e, in welcher der zweite Beinabschnitt 34b angeordnet ist, entlang der zweiten Umfangsrichtung 27b benachbarten Wicklungszone 30f angeordnet. Ein vierter Beinabschnitt 34d ist in der ersten Schicht 23a einer zur Wicklungszone 30f, in welcher der dritte Beinabschnitt 34c angeordnet ist, entlang der zweiten Umfangsrichtung 27b benachbarten Wicklungszone 30g angeordnet.

Die Gruppen dritter Art 123a-d umfassen vier bezüglich der Reihenschaltung aufeinanderfolgende Beinabschnitte, die gesondert mit 35a-d bezeichnet und nummeriert sind. Ferner sind in Fig. 11 drei benachbarte der Wicklungszonen 30 gesondert mit 30h bis 30j bezeichnet. Bei den Gruppen dritter Art 123a-d ist ein erster Beinabschnitt 35a in der zweiten Schicht 23b einer der Wicklungszonen 30h angeordnet. Ein zweiter Beinabschnitt 35b ist in der ersten Schicht 23a einer zur Wicklungszone 30h, in welcher der erste Beinabschnitt 35a angeordnet ist, entlang der zweiten Umfangsrichtung 27b benachbarten Wicklungszone 30i angeordnet. Ein dritter Beinabschnitt 35c ist in der dritten Schicht 23c der Wicklungszone 30h, in welcher der erste Beinabschnitt 35a angeordnet ist, angeordnet. Ein vierter Beinabschnitt 35d ist in der vierten Schicht 23d der Wicklungszone 30i, in welcher der zweite Beinabschnitt 35b angeordnet ist, angeordnet.

Die Halbgruppe erster Art 122 umfasst zwei bezüglich der Reihenschaltung aufeinanderfolge Beinabschnitte, die gesondert mit 136a, 136b bezeichnet und nummeriert sind. Ferner sind in Fig. 11 drei benachbarte der Wicklungszonen 30 gesondert mit 30p bis 30r bezeichnet. Bei der Halbgruppe erster Art 122 ist ein erster Beinabschnitt 136a in der dritten Schicht 23c einer der Wicklungszonen 30p angeordnet. Ein zweiter Beinabschnitt 136b ist in der vierten Schicht 23d einer zur Wicklungszone 30p, in welcher der erste Beinabschnitt 136a angeordnet ist, entlang der zweiten Umfangsrichtung 27b benachbarten Wicklungszone 30q angeordnet.

Die Halbgruppe zweiter Art 124 umfasst zwei bezüglich der Reihenschaltung aufeinanderfolge Beinabschnitte, die gesondert mit 137a, 137b bezeichnet und nummeriert sind. Ferner sind in Fig. 11 zwei benachbarte der Wicklungszonen 30 gesondert mit 30s, 30t bezeichnet. Bei der Halbgruppe zweiter Art 124 ist ein erster Beinabschnitt 137a in der zweiten Schicht 23b einer der Wicklungszonen 30s angeordnet. Ein zweiter Beinabschnitt 137b ist in der ersten Schicht 23a einer zur Wicklungszone 30s, in welcher der erste Beinabschnitt 137a angeordnet ist, entlang der zweiten Umfangsrichtung 27b benachbarten Wicklungszone 30t angeordnet.

Der erste Beinabschnitt 33a solcher Gruppen erster Art 118b, 119a-d, 120a, 120b, die bezüglich der Reihenschaltung unmittelbar einem vierten Beinabschnitt 33d einer anderen der Gruppen erster Art 118a, 118b, 119a-d, 120a nachfolgen, ist in derjenigen Wicklungszone 30c, die der Wicklungszone 30b, in welcher der vierte Beinabschnitt 33d angeordnet ist, entlang der ersten Umfangsrichtung 27a nachfolgt, angeordnet.

Der erste Beinabschnitt 34a solcher Gruppen zweiter Art 121b, die bezüglich der Reihenschaltung unmittelbar einem vierten Beinabschnitt 34d einer anderen der Gruppen zweiter Art 121a nachfolgen, ist in derjenigen Wicklungszone 30f, in welcher der dritte Beinabschnitt 34c der anderen Gruppe zweiter Art 121a angeordnet ist, angeordnet.

Der erste Beinabschnitt 35a derjenigen Gruppe dritter Art 123a, die bezüglich der Reihenschaltung unmittelbar dem zweiten Beinabschnitt 136b der Halbgruppe erster Art 122 nachfolgt, ist in derjenigen Wicklungszone 30r angeordnet, die der Wicklungszone 30q, in welcher der zweite Beinabschnitt 136b der Halbgruppe erster Art 122 angeordnet ist, entlang der zweiten Umfangsrichtung 27b nachfolgt.

Der erste Beinabschnitt 137a der Halbgruppe zweiter Art 124 ist in derjenigen Wicklungszone 30j, die der Wicklungszone 30i, in welcher der vierte Beinabschnitt der Gruppe dritter Art 123d angeordnet ist, entlang der zweiten Umfangsrichtung 27b nachfolgt, angeordnet.

Der erste Beinabschnitt 34a (siehe Fig. 10) derjenigen Gruppe zweiter Art 125, die bezüglich der Reihenschaltung unmittelbar dem zweiten Beinabschnitt 137b der Halbgruppe zweiter Art 124 nachfolgt, ist in derjenigen Wicklungszone 30s, in welcher der erste Beinabschnitt 137a der Halbgruppe zweiter Art 124 angeordnet ist, angeordnet.

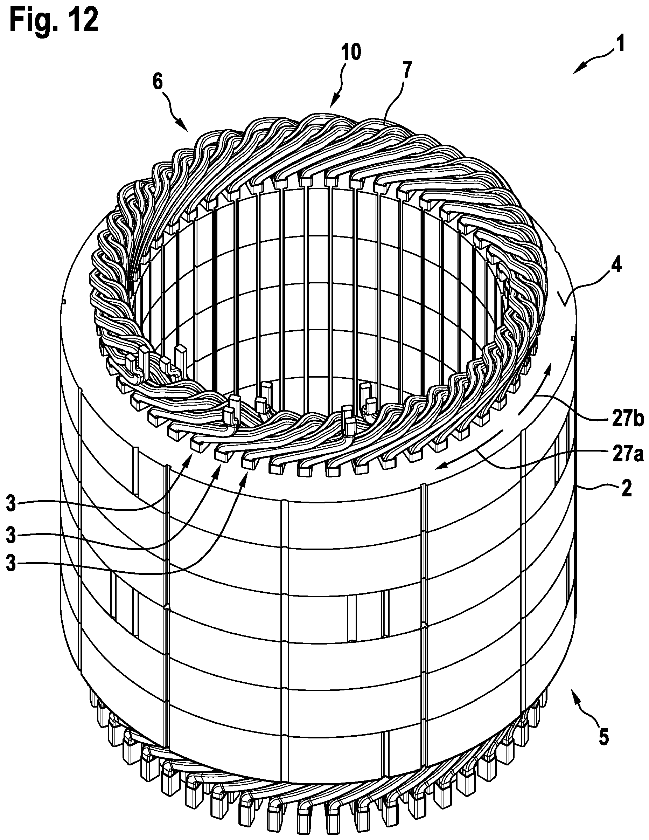

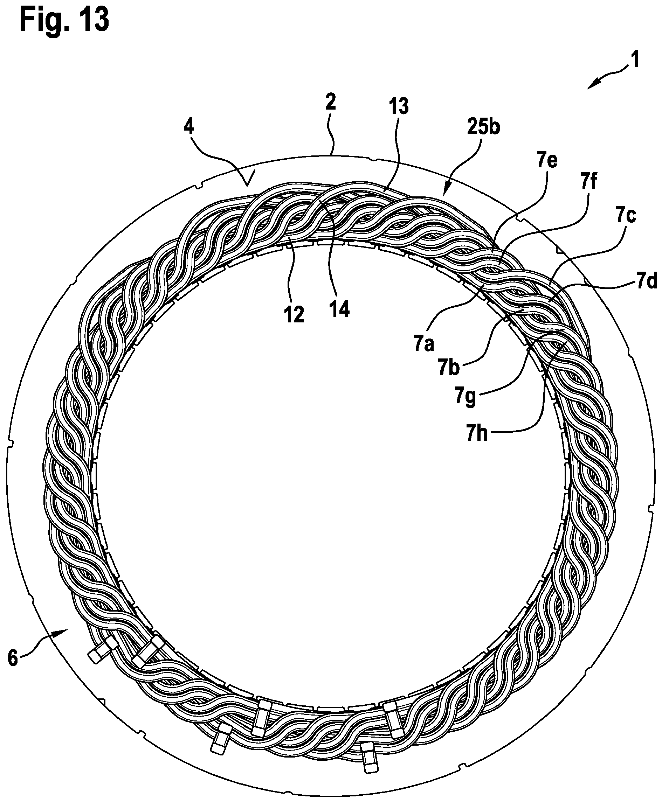

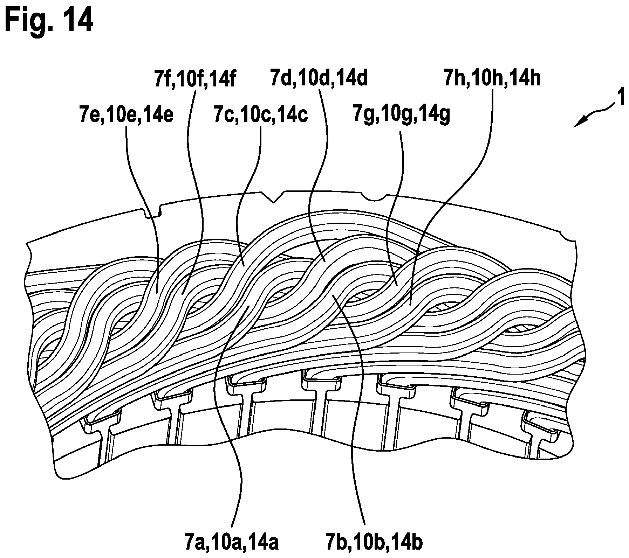

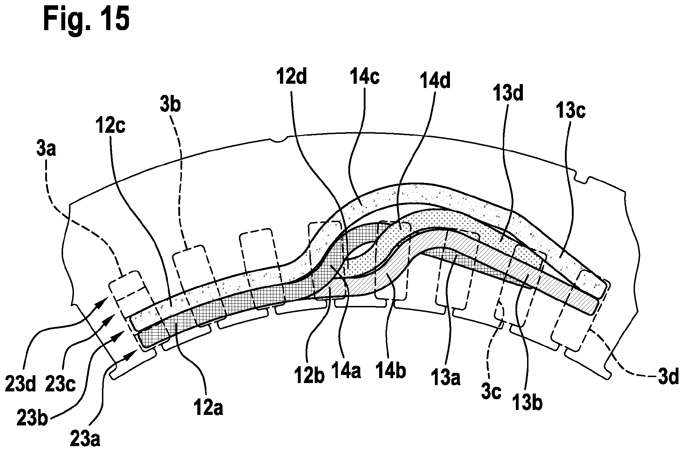

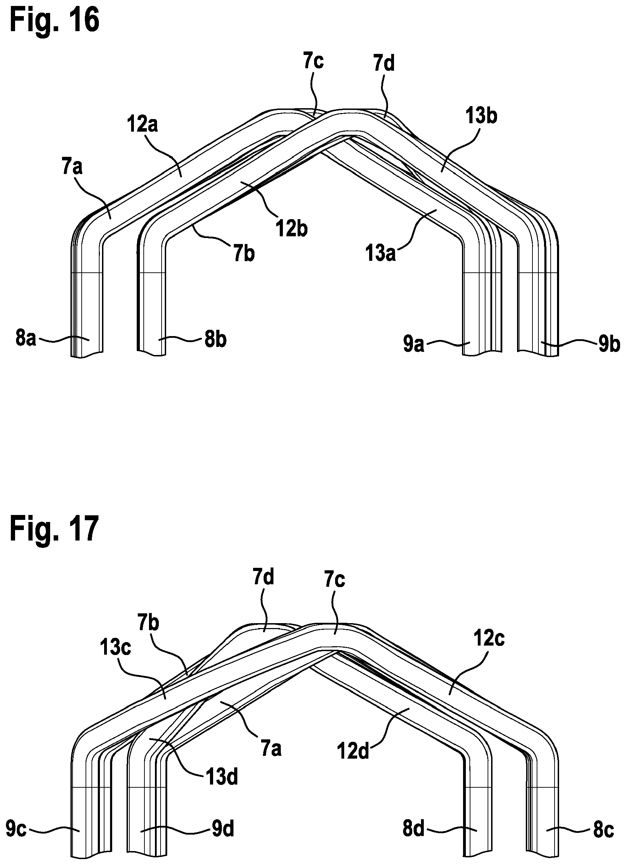

Fig. 12 bis Fig. 17 zeigen ein zweites Ausführungsbeispiels eines Stators 1. Dabei entsprechen die Darstellung in Fig. 12 jener in Fig. 1 und die Darstellungen in Fig. 13 bis Fig. 17 jenen in Fig. 3 bis Fig. 7. Auf den Stator 1 gemäß dem zweiten Ausführungsbeispiel lassen sich alle Ausführungen zum ersten Ausführungsbeispiel übertragen, soweit im Folgenden nicht Abweichendes beschrieben ist. Dabei sind gleiche oder gleichwirkende Komponenten mit identischen Bezugszeichen versehen.

Beim zweiten Ausführungsbeispiel verläuft der äußere Abschnitt 13c zumindest abschnittsweise radial weiter außen als der äußere Abschnitt 13e des Kopfabschnitts 10e des siebten Formleiters 7e und als der äußere Abschnitt 13g des Kopfabschnitts 10g des siebten Formleiters 7g. Der äußere Abschnitt 13b verläuft zumindest teilweise radial weiter innen als der äußere Abschnitt 13d. Der äußere Abschnitt des Kopfabschnitts 13b überdeckt den äußeren Abschnitt 13a mit Blick auf die Stirnseite 4 zumindest teilweise.

Im Übrigen sind beim zweiten Ausführungsbeispiel die Kopfabschnitte 10a, 10b, 10f der ersten, zweiten und sechsten Formleiter 7a, 7b, 7f identisch geformt. Ebenso sind die Kopfabschnitte 10d und 10e der vierten und fünften Formleiter 7d, 7e identisch geformt.

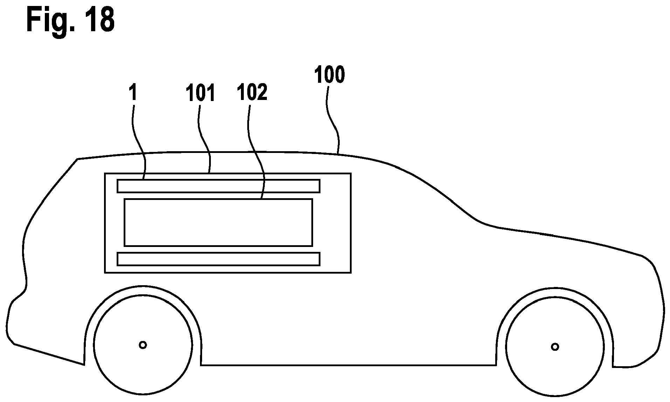

Fig. 18 ist eine Prinzipskizze eines Ausführungsbeispiels eines Fahrzeugs 100 mit einem Ausführungsbeispiel einer elektrischen Maschine 101.

Die elektrische Maschine 101 umfasst einen Stator 1 gemäß einem der zuvor beschriebenen Ausführungsbeispiele und einen Rotor 102, der drehbar bezüglich des Stators 1 gelagert ist. Die elektrische Maschine 101 ist eine permanenterregte Synchronmaschine, eine Synchron-Reluktanzmaschine oder eine Asynchronmaschine/Induktionsmaschine und dazu eingerichtet, das Fahrzeug 100 anzutreiben. Das Fahrzeug 100 ist ein batterieelektrisches Fahrzeug oder ein Hybridfahrzeug.

## Patentansprüche

1. Stator (1) für elektrische Maschine (101), aufweisend einen Statorkern (2), in dem eine Vielzahl entlang einer Umfangsrichtung verteilter Nuten (3, 3a-d) ausgebildet ist und der zwei in einer Axialrichtung gegenüberliegende Stirnseiten (4, 5) aufweist, und eine Statorwicklung (6), die eine Vielzahl von Formleitern (7, 7a-h) aufweist, wobei
- die Formleiter (7, 7a-h) jeweils einen ersten Beinabschnitt (8, 8a-h), einen zweiten Beinabschnitt (9, 9a-h) und einen die Beinabschnitte (8, 8a-h, 9, 9a-h) an einer der Stirnseiten (4) elektrisch leitfähig verbindenden Kopfabschnitt (10, 10a-h) aufweisen, wobei
- sich die Beinabschnitte (8, 8a-h, 9, 9a-h) eines jeweiligen Formleiters (7, 7a-h) durch unterschiedliche Nuten (3, 3a-d) erstrecken und eine Schrittweite von einer Anzahl Nuten (3, 3a-d) voneinander entfernt sind, wobei
- der Kopfabschnitt (10, 10a-h) einen inneren Abschnitt (12, 12a-h), der sich in der Umfangsrichtung erstreckt und an den ersten Beinabschnitt (8, 8a-h) anschließt, und einen äußeren Abschnitt (13, 13a-h), der sich in der Umfangsrichtung erstreckt, an den zweiten Beinabschnitt (9, 9a-h) anschließt und radial weiter außen angeordnet ist als der innere Abschnitt (12, 12a-h), aufweist, wobei
- die Schrittweite bei einem ersten und einem zweiten der Formleiter (7a, 7b) S beträgt, bei einem dritten der Formleiter (7c) um wenigstens eins größer als S ist und bei einem vierten der Formleiter (7d) um wenigstens eins kleiner als S ist, wobei S eine natürliche Zahl ist,
**dadurch gekennzeichnet,**
- **dass** der Kopfabschnitt (10, 10a-h) ferner einen Versatzabschnitt (14, 14a-h), der den inneren Abschnitt (12, 12a-h) mit dem äußeren Abschnitt (13, 13a-h) verbindet und eine größere Radialerstreckung als der innere Abschnitt (12, 12a-h) und der äußere Abschnitt (13, 13a-h) aufweist, aufweist und
- **dass** der äußere Abschnitt (13c) des Kopfabschnitts (10c) des dritten Formleiters (7c) zumindest teilweise radial weiter außen verläuft als die äußeren Abschnitte (13a, 13b, 13d) der Kopfabschnitte (10a, 10b, 10d) des ersten, zweiten und vierten Formleiters (7a, 7b, 7d).

2. Stator nach Anspruch 1, wobei
der äußere Abschnitt (13d) des Kopfabschnitts (10d) des vierten Formleiters (7d) zumindest teilweise radial weiter außen verläuft als der äußere Abschnitt (13a) des Kopfabschnitts (10a) des ersten Formleiters (7a).

3. Stator nach einem der vorhergehenden Ansprüche, wobei jede Nut (3, 3a-d) radial zumindest in erste bis vierte Schichten (23a-d), die in der Reihenfolge ihrer Benennung aufeinanderfolgen, zum Aufnehmen eines der Beinabschnitte (8, 8a-h) eines der Formleiter (7, 7a-h) untergliedert ist, wobei der erste Beinabschnitt (8, 8a-h) in der ersten oder zweiten Schicht (23a, 23b) angeordnet ist und/oder der zweite Beinabschnitt (9, 9a-h) in der dritten oder vierten Schicht (23c, 23d) angeordnet ist.

4. Stator nach einem der vorhergehenden Ansprüche, wobei
- die ersten Beinabschnitte (8a, 8c) des ersten und dritten Formleiters (7a, 7c) in derselben Nut (3a) angeordnet sind und die ersten Beinabschnitte (8b, 8d) des zweiten und vierten Formleiters (7b, 7d) in derselben Nut (3b) angeordnet sind und/oder
- die zweiten Beinabschnitte (9a, 9d) des ersten und vierten Formleiters (7a, 7d) in derselben Nut (3c) angeordnet sind und die zweiten Beinabschnitte (9b, 9c) des zweiten und dritten Formleiters (7b, 7c) in derselben Nut (3d) angeordnet sind.

5. Stator nach Anspruch 4, wobei
- die Nut (3a), in welcher die ersten Beinabschnitte (8a, 8c) des ersten und dritten Formleiters (7a, 7c) angeordnet sind, und die Nut (3b), in welcher die ersten Beinabschnitte (8b, 8d) des zweiten und vierten Formleiters (7b, 7d) angeordnet sind, unmittelbar benachbart sind und/oder
- die Nut (3c), in welcher die zweiten Beinabschnitte (9a, 9d) des ersten und vierten Formleiters (7a, 7d) angeordnet sind, und die Nut (3d), in welcher die zweiten Beinabschnitte (9b, 9c) des zweiten und dritten Formleiters (7b, 7c), angeordnet sind, unmittelbar benachbart sind.

6. Stator nach einem der vorhergehenden Ansprüche, wobei
- bei fünften bis achten der Formleiter (7e-h) die Schrittweite S beträgt, wobei
- die ersten Beinabschnitte (8e, 8f) des fünften und sechsten Formleiters (7e, 7f) in derselben Nut (3) angeordnet sind und die Nut (3) benachbart zur Nut (3a) ist, in welcher die ersten Beinabschnitte (8a, 8c) des ersten und dritten Formleiters angeordnet (7a, 7c) sind, wobei
- die ersten Beinabschnitte (8g, 8h) des siebten und achten Formleiters (7g, 7h) in derselben Nut (3) angeordnet sind und die Nut (3) benachbart zur Nut (3b) ist, in welcher die ersten Beinabschnitte (8b, 8d) des zweiten und vierten Formleiters (7b, 7d) angeordnet sind, wobei
- die Kopfabschnitte (10a-d) des ersten bis vierten Formleiters (7a-d) zwischen den Kopfabschnitten (10e, 10f) des fünften und sechsten Formleiters (7e, 7f) und den Kopfabschnitten (10g, 10h) des siebten und achten Formleiters (7g, 7h) angeordnet sind.

7. Stator nach Anspruch 6, wobei
die Umfangsrichtungserstreckung der Versatzabschnitte (14e-h) des fünften bis achten Formleiters (7e-h), insbesondere in Abhängigkeit einer Materialstärke der Formleiter (7, 7a-h) und/oder ihrer Biegeradien, derart gering gewählt ist, dass der äußere Abschnitt (13g) des Kopfabschnitts (10g) des siebten Formleiters (7g) den äußeren Abschnitt (13c) des Kopfabschnitts (10c) des dritten Formleiters (7c) axial überdeckt.

8. Stator nach einem der vorhergehenden Ansprüche, wobei der äußere Abschnitt (13b) des Kopfabschnitts (10b) des zweiten Formleiters (7b) den äußeren Abschnitt (13d) des Kopfabschnitts (10d) des vierten Formleiters (d) mit Blick auf die Stirnseite (4) zumindest teilweise überdeckt.

9. Stator nach einem der vorhergehenden Ansprüche, wobei der äußere Abschnitt (13c) des Kopfabschnitts (10c) des dritten Formleiters (7c) zumindest teilweise axial weiter vom Statorkern (2) entfernt verläuft als der äußere Abschnitt (13d) des Kopfabschnitts (10d) des vierten Formleiters (7d) und/oder als der äußere Abschnitt (13a) des Kopfabschnitts (10a) des ersten Formleiters (7a).

10. Stator nach einem der vorhergehenden Ansprüche, wobei die Versatzabschnitte (14a, 14c, 14d) der Kopfabschnitte (10a, 10c, 10d) der ersten, dritten und vierten Formleiter (7a, 7c, 7d) entlang eines Winkelbereichs der Umfangsrichtung, der zumindest die Hälfte eines vom Versatzabschnitt (14a) des Kopfabschnitts (10a) des ersten Formleiters (7a) eingenommenen Winkelbereichs der Umfangsrichtung einnimmt, nebeneinander verlaufen.

11. Stator nach Anspruch 6, wobei
der äußere Abschnitt (13c) des Kopfabschnitts (10c) des dritten Formleiters (7c) zumindest abschnittsweise radial weiter außen verläuft als der äußere Abschnitt (13e) des Kopfabschnitts (10e) des fünften Formleiters (7e) und/oder als der äußere Abschnitt (13g) des Kopfabschnitts (10g) des siebten Formleiters (7g).

12. Stator nach einem der Ansprüche 1 bis 6 oder nach Anspruch 11, wobei
- der äußere Abschnitt (13b) des Kopfabschnitts (10b) des zweiten Formleiters (7b) zumindest teilweise radial weiter innen verläuft als der äußere Abschnitt (13d) des Kopfabschnitts (10d) des vierten Formleiters (7d) und/oder
- der äußere Abschnitt (13b) des Kopfabschnitts (10b) des zweiten Formleiters (7b) den äußeren Abschnitt (13a) des Kopfabschnitts (10a) des ersten Formleiters (7a) mit Blick auf die Stirnseite (4) zumindest teilweise überdeckt.

13. Stator nach einem der vorhergehenden Ansprüche, wobei die Formleiter (7, 7a-h) mehrere Stränge (U, V, W) der Statorwicklung (6) ausbilden, wobei der erste bis vierte Formleiter (7a-d) zu demselben Strang (U, V, W) gehören.

14. Stator nach Anspruch 13, wobei
die Formleiter (7, 7a-h) für jeden Strang (U, V, W) einen ersten Strompfad (115a) und einen zweiten Strompfad (115b), der parallel oder in Reihe zum ersten Strompfad (115a) geschaltet ist, ausbilden, wobei die ersten bis vierten Formleiter (7a-d) eine Formleiteranordnung (25a) ausbilden, bei welcher der dritte Formleiter (7c) und der vierte Formleiter (7d) im ersten Strompfad (115a) verschaltet sind und der erste Formleiter (7a) und der zweite Formleiter (7b) im zweiten Strompfad (115b) verschaltet sind, wobei eine weitere entsprechende Formleiteranordnung (25b) vorgesehen ist, bei welcher der dritte Formleiter (7c) und der vierte Formleiter (7d) im zweiten Strompfad (115b) verschaltet sind und der erste Formleiter (7a) und der zweite Formleiter (7b) im ersten Strompfad (115a) verschaltet sind.

15. Elektrische Maschine (101), aufweisend einen Stator (1) nach einem der vorhergehenden Ansprüche; und einen Rotor (102), der drehbar innerhalb des Stators (1) gelagert ist; wobei die elektrische Maschine (101) dazu eingerichtet ein Fahrzeug (100) anzutreiben.
